# EUROPEAN PATENT SPECIFICATION

(11) **EP 3 341 417 B1**
(45) Date of publication and mention of the grant of the patent: **07.08.2019**
(21) Application number: 16760889.2
(22) Date of filing: 29.08.2016
(51) Int. Cl.: C08B 37/00, C08L 5/00, D01F 9/00

(54) **BENZYL ALPHA-(1, 3)-GLUCAN AND FIBERS THEREOF**
BENZYL-ALPHA-(1, 3)-GLUCAN UND FASERN DAVON
BENZYL ALPHA-(1, 3)-GLUCANE ET FIBRES DE CELUI-CI

(30) Priority: 28.08.2015 US 201562211236 P; 28.08.2015 US 201562211217 P
(43) Date of publication of application: 04.07.2018
(73) Proprietor: E. I. du Pont de Nemours and Company, Wilmington, DE 19805 (US)
(72) Inventor: JOHNSON, Ross S., Wilmington, DE 19808 (US); BEHABTU, Natnael, Wilmington, DE 19801 (US); BRIEGEL, Alicia C., Wilmington, DE 19806 (US); MCADAMS III, Hugh P., Rising Sun, MD 21911 (US)
(74) Representative: Dehns
(86) International application number: PCT/US2016/049194
(87) International publication number: WO 2017/040369

(56) References cited:
- US-A1- 2014 179 913

## Description

### CROSS-REFERENCE TO RELATED APPLICATIONS

This application claims benefit of U.S. Patent Application Nos. 62/211,236 and 62/211,217, each filed August 28, 2015.

### FIELD OF THE DISCLOSURE

The present disclosure is directed towards benzyl α-(1→3)-glucan and towards a fiber comprising benzyl α-(1→3)-glucan. Benzyl α-(1→3)-glucan is a benzylated derivative of poly-α-(1→3)-glucan and displays properties that distinguish it from poly-α-(1→3)-glucan.

### BACKGROUND OF THE DISCLOSURE

Polysaccharides are an important class of polymers that have been known for many centuries. One of the most industrially important polysaccharides is cellulose. In particular, cotton, a highly pure form of naturally occurring cellulose, is well-known for its beneficial attributes in textile applications. Cellulose and starch, both based on molecular chains of polyanhydroglucose are the most abundant polymers on earth and are of great commercial importance. Such polymers offer materials that are environmentally benign throughout their entire life cycle and are constructed from renewable energy and raw materials sources.

The term "glucan" refers to a polysaccharide comprising glucose monomer units that are linked in eight possible ways. Cellulose is a glucan. Within a glucan polymer, the repeating monomeric units can be linked in a variety of configurations following an enchainment pattern. The nature of the enchainment pattern depends, in part, on how the ring closes when an aldohexose ring closes to form a hemiacetal. The open chain form of glucose (an aldohexose) has four asymmetric centers. Hence there are 2⁴ or 16 possible open chain forms of which D and L glucose are two. When the ring is closed, a new asymmetric center is created at C1 thus making 5 asymmetric carbons. Depending on how the ring closes, for glucose, α-(1→4) linked polymer, e.g. starch, or β-(1→4) linked polymer, e.g. cellulose, can be formed upon further condensation to polymer. The configuration at C1 in the polymer determines whether it is an alpha or beta linked polymer, and the numbers in parenthesis following alpha or beta refer to the carbon atoms through which enchainment takes place.

The properties exhibited by a glucan polymer are determined by the enchainment pattern. For example, the very different properties of cellulose and starch are determined by the respective nature of their enchainment patterns. Starch contains amylose and amylopectin and is formed from α-(1→4) linked glucose. Starch tends to be partially water soluble and forms brittle articles. On the other hand, cellulose consists of β-(1→4) linked glucose, and makes an excellent structural material being both crystalline and hydrophobic, and is commonly used for textile applications as cotton fiber, as well as for structures in the form of wood.

Recently, α-(1→3)-glucan polymer, characterized by α-(1→3) glycoside linkages, has been isolated by contacting an aqueous solution of sucrose with GtfJ glucosyltransferase isolated from *Streptococcus salivarius.* O'Brien, U.S. Patent No. 7,000,000 discloses a process for preparing fiber from liquid crystalline solutions of acetylated poly α-(1→3) glucan. The thus prepared fiber was then de-acetylated resulting in a fiber of poly α-(1→3) glucan. While certain α-(1→3)-glucan fibers are known, they fibers produced therefrom do not meet some end-use requirements. The fibers have high water retention which decreases the wet strength and wet modulus making them weaker than dry fibers. The solubility profile of α-(1→3)-glucan often requires the use of a salt, such as, lithium chloride and/or calcium chloride, to increase the solubility in solvents like dimethyl acetamide. The addition of salt increases the complexity of the spinning process.

There is still a need for fibers of α-(1→3)-glucan that have increased solubility and better properties.

### SUMMARY OF THE DISCLOSURE

The present disclosure is related to benzyl α-(1→3)-glucan, compositions thereof, and blends of benzyl α-(1→3)-glucan with one or more polymers.

In some embodiments, the benzyl α-(1→3)-glucan can have a degree of substitution in the range of from 0.01 to 3.0.

In other embodiments, the benzyl α-(1→3)-glucan has repeat units wherein the glucose repeat units comprise greater than or equal to 50 percent α-(1→3) glucoside linkages.

In other embodiments, the benzyl group is substituted by one or more of halogen, a cyano, an ester, an amide, an ether group, a C₁ to C₆ alkyl group, an aryl group, a C₂ to C₆ alkene group, a C₂ to C₆ alkyne group, or a combination thereof.

In other embodiments, the benzyl α-(1→3)-glucan composition comprises one or more solvents.

In other embodiments, the one or more solvents are dimethyl sulfoxide, dimethyl acetamide, dimethyl formamide, pyridine, 1-methyl-2-pyrrolidinone, or a combination thereof.

In other embodiments, the disclosure relates to blends of benzyl α-(1→3)-glucan and one or more polymers.

In other embodiments, the one or more polymers are polyaramid, polyacrylonitrile, cellulose, or a combination thereof.

The present disclosure is also related to fibers comprising benzyl α-(1→3)-glucan.

In other embodiments, the disclosure relates to fibers comprising blends of benzyl α-(1→3)-glucan and one or more polymers.

In other embodiments, the one or more polymers are polyaramid, polyacrylonitrile, cellulose, or a combination thereof.

In one embodiment, the disclosure relates to a fiber comprising benzyl α-(1→3)-glucan, wherein the fiber is a blend of benzyl α-(1→3)-glucan with one or more polymers, and wherein the one or more polymers are polyaramid, polyacrylonitrile, cellulose, or a combination thereof.

The disclosure also relates to a method comprising:
1) providing a solution of benzyl α-(1→3)-glucan in a solvent;
2) causing the solution to flow through a spinneret; and
3) removing at least a portion of the solvent.

The disclosure also relates to an article comprising fiber comprising benzyl α-(1→3)-glucan.

In other embodiments, the article is a carpet, a textile, fabric, yarn, or apparel.

### DETAILED DESCRIPTION OF THE DISCLOSURE

As used herein, the term "embodiment" or "disclosure" is not meant to be limiting, but applies generally to any of the embodiments defined in the claims or described herein. These terms are used interchangeably herein.

Unless otherwise disclosed, the terms "a" and "an" as used herein are intended to encompass one or more (i.e., at least one) of a referenced feature.

The features and advantages of the present disclosure will be more readily understood, by those of ordinary skill in the art from reading the following detailed description. It is to be appreciated that certain features of the disclosure, which are, for clarity, described above and below in the context of separate embodiments, may also be provided in combination in a single element. Conversely, various features of the disclosure that are, for brevity, described in the context of a single embodiment, may also be provided separately or in any sub-combination. In addition, references to the singular may also include the plural (for example, "a" and "an" may refer to one or more) unless the context specifically states otherwise.

The use of numerical values in the various ranges specified in this application, unless expressly indicated otherwise, are stated as approximations as though the minimum and maximum values within the stated ranges were both proceeded by the word "about". In this manner, slight variations above and below the stated ranges can be used to achieve substantially the same results as values within the ranges. Also, the disclosure of these ranges is intended as a continuous range including each and every value between the minimum and maximum values.

As used herein:
The term "α-(1→3)-glucan" refers to a polymer having α-(1→3)-D-glucoside linkages, wherein the α-(1→3)-D-glucoside linkages comprise greater than or equal to 50% of the glucoside linkages in the polymer.
The term "benzyl α-(1→3)-glucan" refers to an α-(1→3)-glucan polymer wherein at least one of the hydroxyl groups in the polymer has been modified by a benzyl group.

It has been found that benzyl α-(1→3)-glucan can possess an increased solubility in certain polar solvents, for example, dimethyl sulfoxide, dimethyl acetamide, dimethyl formamide, pyridine, 1-methyl-2-pyrrolidinone, or a combination thereof.

Benzyl α-(1→3)-glucan can be produced by benzylating α-(1→3)-glucan. The α-(1→3)-glucan can be produced, for example, by methods described in U.S. Patent 7,000,000, contacting an aqueous solution of sucrose with gtfJ glucosyltransferase isolated from *Streptococcus salivarius.* In an alternative such method, the gtfJ is generated by genetically modified *E*. *coli.*

Produced using known methods, the α-(1→3)-glucan contains greater than or equal to 50% α-(1→3)-glucoside linkages. In other embodiments, the α-(1→3)-glucan contains greater than or equal to 60% or 70% or 75% or 80% or 85% or 90% or 95% or 96% or 97% or 98% or 99% α-(1→3)-glucoside linkages. Additionally, other glucoside linkages may be present, for example, α-(1→4), α-(1→6), β-(1→2), β-(1→3), β-(1→4), β-(1→6) glucoside linkages or any combination thereof can be present. The α-(1→3)-glucan can also have a number average molecular weight in the range of from 10,000 to 2,000,000 daltons. In other embodiments, the number average molecular weight is in the range of from 20,000 to 1,500,000, or from 30,000 to 1,250,000, or from 40,000 to 1,000,000, or from 50,000 to 1,000,000, or from 50,000 to 750,000, or from 50,000 to 500,000 daltons. The number and weight average molecular weights as used herein, and unless otherwise specified, were measured by size exclusion chromatography (SEC) in dimethyl sulfoxide and the units are in Daltons or kilodaltons.

The α-(1→3)-glucan can be benzylated by deprotonating one or more of the hydroxyl groups using a base, for example, sodium hydroxide, potassium hydroxide, sodium alkoxide, potassium alkoxide, or sodium hydride, followed by treatment with a benzylating agent, for example, a benzyl halide. The benzyl group of the benzylating agent can optionally substituted by one or more of halogen, a cyano, an ester, an amide, an ether group, a C₁ to C₆ alkyl group, an aryl group, a C₂ to C₆ alkene group, a C₂ to C₆ alkyne group, or a combination thereof. In some embodiments, the benzylating agent can be: 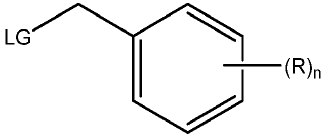 wherein LG is a leaving group, for example, chloride, bromide, iodide; R is halogen, cyano, ester, amide, ether, C₁ to C₆ alkyl, aryl, C₂ to C₆ alkene, C₂ to C₆ alkyne; and n is 1, 2, 3, 4 or 5. Halogen can be fluoride, chloride, bromide, or iodide. The ester can be benzyl-C(O)O-R1, or the ester can be benzyl-OC(O)-R1, wherein the R1 group is a C₁ to C₆ alkyl or an aryl group. The ether can be a C₁ to C₆ alkyl ether or an aryl ether. The amide can be benzyl-C(O)N(R2)₂ or benzyl-N(R2)(O)C-, wherein each R2 is independently hydrogen or C₁ to C₆ alkyl. In each of the above examples, the term 'benzyl' refers to the benzylating agent.

The α-(1→3)-glucan polymer has 3 hydroxyl groups per repeat unit. Therefore, the amount of benzylating agent that can be used is enough to produce a degree of substitution that has a maximum value of 3.0. The phrase "degree of substitution" means the average number of substituent groups, for example, benzyl groups, attached per repeat unit of the α-(1→3)-glucan polymer. For example, a degree of substitution of 0.5 means that, on average, one hydroxyl group per 2 repeat units is substituted by a benzyl group. A degree of substitution of 3 means that all hydroxyl groups of the α-(1→3)-glucan polymer are substituted. In some embodiments, the degree of substitution is in the range of from 0.1 to 0.6. In other embodiments, the degree of substitution is in the range of from 0.1 to 0.5, or from 0.01 to 1.0, or from 0.2 to 0.45, or from 0.4 to 0.6. In still further embodiments, the benzyl α-(1→3)-glucan can have a degree of substitution that can be between and optionally include any two of the following values: 0.01, 0.02, 0.03, 0.04, 0.05, 0.06, 0.07, 0.08, 0.09, 0.10, 0.11, 0.12, 0.13, 0.14, 0.15, 0.16, 0.17, 0.18, 0.19, 0.20, 0.21, 0.22, 0.23, 0.24, 0.25, 0.26, 0.27, 0.28, 0.29, 0.30, 0.31, 0.32, 0.34, 0.35, 0.36, 0.37, 0.38, 0.39, 0.40, 0.41, 0.42, 0.43, 0.44, 0.45, 0.46, 0.47, 0.48, 0.49, 0.50, 0.51, 0.52, 0.53, 0.54, 0.55, 0.56, 0.57, 0.58, 0.59, 0.60, 0.65, 0.70, 0.75, 0.80, 0.85, 0.90, 0.95, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9 or 3.0. The degree of substitution as determined herein is either by integration of the peaks of a carbon-13 NMR spectrum, or by ¹H NMR analysis of a depolymerized sample of benzyl α-(1→3)-glucan. In other embodiments, proton NMR and/or 2-dimensional proton NMR can also be used. Unless otherwise stated in the examples, the degree of substitution was determined by carbon-13 NMR analysis.

Deprotonation can take place in the presence of a base and an aqueous solvent, a base and an organic solvent, or a base and a mixture of an aqueous and organic solvent. Suitable organic solvents can include, for example, dimethyl sulfoxide, dimethyl acetamide, dimethyl formamide, pyridine, 1-methyl-2-pyrrolidinone, or a combination thereof. In some embodiments, the α-(1→3)-glucan can be added to a mixture of the base and the solvent. Optionally, the mixture can be heated. The benzylating agent, for example, benzyl chloride, can then be added. In an aqueous system, as the degree of benzylation increases, the benzyl α-(1→3)-glucan precipitates from the solution, and can be removed by filtration. By utilizing organic solvents, or varying the temperature or concentration, the degree of substitution can be increased above 0.4. The benzyl α-(1→3)-glucan can be isolated using known techniques, or can be used as is.

The benzyl α-(1→3)-glucan can have a number average molecular weight in the range of from 10,000 to 2,000,000 daltons. In other embodiments, the number average molecular weight in the range of from 20,000 to 1,500,000, or from 30,000 to 1,250,000, or from 40,000 to 1,000,000, or from 50,000 to 1,000,000, or from 50,000 to 750,000, or from 50,000 to 500,000. The number and weight average molecular weights as used herein, and unless otherwise specified, were measured by size exclusion chromatography (SEC) in dimethyl sulfoxide and the units are in Daltons or kilodaltons.

The present disclosure also relates to a composition comprising benzyl α-(1→-3)-glucan. In some embodiments, the composition comprises benzyl α-(1→3)-glucan and an organic solvent. Benzyl α-(1→3)-glucan has increased solubility in organic solvents at 20°C, when compared to the solubility of α-(1→3)-glucan in the same organic solvents at 20°C. In some embodiments, the benzyl α-(1→3)-glucan forms a solution at a low concentration and, as the concentration of the benzyl α-(1→3)-glucan in the solvent increases, a gel has been observed to form. The gel point can vary upon a number of factors, including, for example, the organic solvent, the degree of substitution and the molecular weight of the benzyl α-(1→3)-glucan. In some embodiments, the gel point can be 30 percent by weight, based on the total weight of the benzyl α-(1→3)-glucan and the organic solvent at 20°C. In other embodiments, the gel point can be 31, 32, 33, 34, 35, 36, 37, 38, 39 or 40 percent by weight, wherein the percentages by weight are based on amount of the total amount of the benzyl α-(1→3)-glucan and organic solvent at 20°C. In still further embodiments, the gel point can be greater than 40 percent by weight. The benzyl α-(1→3)-glucan composition can comprise an aqueous solvent, an organic solvent or a combination thereof. The organic solvents can include, for example, polar solvents, such as, dimethyl sulfoxide, dimethyl acetamide, dimethyl formamide, pyridine, 1-methyl-2-pyrrolidinone, or a combination thereof. In some embodiments, the benzyl α-(1→3)-glucan solution is free from a salt. The phrase "free from a salt" means that a composition comprises less than 5 percent by weight of the salt, based on the total weight of the composition. In other embodiments, the composition comprises less than 3 percent by weight, or less than 2 percent by weight, or less than 1 percent by weight, or less than 0.5 percent by weight of the salt.

In some embodiments, the benzyl α-(1→3)-glucan can be blended with one or more polymers. Suitable polymers can include, for example, polyacrylates, polyaramids, polyphenylene isophthalamide, poly-m-phenylene isophthalamide (also known as NOMEX®, available from the DuPont Company, Wilmington, DE), polyphenylene terephthalamide, polyp-phenylene terephthalamide (also known as KEVLAR®, available from the DuPont Company, Wilmington, DE), vinyl polymers, polyethylene, polypropylene, poly(vinyl chloride), polystyrene, polytetrafluoroethylene, poly(alpha -methylstyrene), poly(acrylic acid), poly(isobutylene), poly(acrylonitrile), poly(methacrylic acid), poly(methyl methacrylate), poly(1-pentene), poly(1,3-butadiene), poly(vinyl acetate), poly(2-vinyl pyridine), 1,4-polyisoprene, 3,4-polychloroprene, polyethers, poly(ethylene oxide), poly(propylene oxide), poly(trimethylene glycol) poly(tetramethylene glycol), polyacetals, polyformaldehyde, polyacetaldehyde; polyesters, poly(3-propionate), poly(10-decanoate), poly(ethylene terephthalate), poly(m-phenylene terephthalate); polyamides, polycaprolactam, poly(11-undecanoamide), poly(hexamethylene sebacamide), poly(tetramethylene-m-benzenesulfonamide), polyetheretherketone, polyetherimide, poly(phenylene oxide), polyamide (including polyureas), polyamideimide, polyarylate, polybenzimidazole, polyester (including polycarbonates), polyurethane, polyimide, polyhydrazide, phenolic resins, polysilane, polysiloxane, polycarbodiimide, polyimine, azo polymers, polysulfide, polysulfane, polysaccharides and derivatives thereof such as cellulosic polymers (e.g., cellulose and derivatives thereof as well as cellulose production byproducts such as lignin) and starch polymers (as well as other branched or non-linear polymers, either naturally occurring or synthetic). In some embodiments, the benzyl α-(1→3)-glucan can be blended with starch, cellulose including various esters, ethers, and graft copolymers thereof, polyphenylene isophthalamide, polyphenylene terephthalamide, or polyacrylonitrile. The one or more polymers may be crosslinkable in the presence of a multifunctional crosslinking agent or crosslinkable upon exposure to actinic radiation or other type of radiation. The one or more polymers may be homopolymers of any of the foregoing polymers, random copolymers, block copolymers, alternating copolymers, random tripolymers, block tripolymers, alternating tripolymers, or derivatives thereof (e.g., graft copolymers, esters, or ethers thereof).

The blends can comprise the benzyl α-(1→3)-glucan and the one or more polymers in a weight ratio in the range of from 0.01:99.99 to 99.99:0.01. In other embodiments, the weight ratio can be in the range of from 1:99 to 99:1, or from 5:95 to 95:5, or from 10:90 to 90:10, or from 20:80 to 80:20, or from 30:70 to 70:30, or from 40:60 to 60:40, or from 45:55 to 55:45.

Benzyl α-(1→3)-glucan or any of blends thereof can be spun into fibers. The fibers can be spun from aqueous solutions, organic solutions or a mixture of both aqueous and organic solvents. If an aqueous solution of the benzyl α-(1→3)-glucan is used, the degree of substitution should be low enough so that the benzyl α-(1→3)-glucan is soluble. In some embodiments, benzyl α-(1→3)-glucan having a degree of substitution of less or equal to 0.2 can be used to spin fibers from the aqueous solution. In other embodiments, the degree of substitution can be less than or equal to 0.25, or less than or equal to 0.3, or less than or equal to 0.35, or less than or equal to 0.4 to spin fibers from the aqueous solution. Alternatively, the benzyl α-(1→3)-glucan can be spun from an organic solution. In still further embodiments, the benzyl α-(1→3)-glucan fibers can be spun from a mixture of both aqueous and organic solvents. The concentration of the benzyl α-(1→3)-glucan in the solvent should be in the range of from 5 to 30 percent by weight, for example 5 to 10, or 5 to 15, or 5 to 20, or 5 to 25, or 10 to 20, or 10 to 30, or 15 to 25, or 15 to 30, based on the total weight of the solution. Below 5 percent by weight, the fiber forming ability of the solution is degraded while concentrations above 30 percent by weight are problematic, requiring increasingly refined techniques in order to form the fibers.

At low degrees of substitution, for example, less than or equal to 0.2 or 0.3 or 0.4, the benzyl α-(1→3)-glucan can be soluble in the aqueous base used to form the product. If soluble, then the benzyl α-(1→3)-glucan solution can be fed directly to a spinneret and the resulting fiber quenched in a coagulation bath, for example, an acidic coagulation bath. Suitable acidic coagulants include, for example, glacial acetic acid, aqueous acetic acid, sulfuric acid, combinations of sulfuric acid, sodium sulfate, and zinc sulfate. In some embodiments, the liquid coagulant can be maintained at a temperature in the range of 0 to 100°C, and preferably in the range of 15 to 70°C. In some embodiments, extrusion is effected directly into the acidic coagulation bath. In such a circumstance, known in the art as "wet-spinning," the spinneret is partially or fully immersed in the acidic coagulation bath. The spinnerets and associated fittings should be constructed of corrosion resistant alloys such as stainless steel or platinum/gold. The thus coagulated fiber can then be passed into a second bath provided to neutralize and/or dilute residual acid from the first coagulation bath. The secondary bath preferably contains H₂O, methanol, or aqueous NaHCO₃, or a mixture thereof. In some embodiments, the wound fiber package can be soaked in one or more neutralizing wash baths for a period of time. A sequence of baths comprising any combinations of water, methanol or aqueous NaHCO₃ can also be used.

Any of the known methods for spinning fibers from an aqueous solution, an organic solution, or a mixture of aqueous and organic solvents can be used, for example, wet spinning, dry spinning and air gap spinning are all useful methods. In each of these methods, a solution of the benzyl α-(1→3)-glucan is forced through a single or multi-holed spinneret or other form of a die. The spinneret holes can be of any cross-sectional shape, for example, round, flat, square, rectangular, a polygon or multi-lobed. The benzyl α-(1→3)-glucan can then be passed into a coagulation bath wherein the coagulation bath comprises a liquid coagulant which dissolves the solvent but not the polymer in order to form the desired benzyl α-(1→3)-glucan fiber. In some embodiments, the benzyl α-(1→3)-glucan strand is first passed through an inert, noncoagulating layer, for example, air in the form of an air gap, prior to introduction into the coagulating bath. In other embodiments, the material can be extruded directly into a coagulating bath. In general, the method comprises:
1) providing a solution of the benzyl α-(1→3)-glucan;
2) causing the solution to flow through a spinneret; and
3) removing at least a portion of the solvent.

The solution of the benzyl α-(1→3)-glucan can be benzyl α-(1→3)-glucan by itself, or it can be a blend of benzyl α-(1→3)-glucan with one or more polymers. In some embodiments, the one or more polymers can be any of those listed above as suitable for use in the blend. In other embodiments, the one or more polymers can be polyphenylene isophthalamide, polyphenylene terephthalamide, polyacrylonitrile, cellulose, or a combination thereof.

The benzyl α-(1→3)-glucan fibers can be used to produce an article. In some embodiments, the article can be a carpet, a textile, fabric, yarn, or apparel.

Non-limiting embodiments of the disclosure herein include:
1. Benzyl α-(1,3-)glucan.
2. A composition comprising benzyl α-(1→3)-glucan.
3. The benzyl α-(1→3)-glucan of embodiment 1 or 2 wherein the benzyl α-(1→3)-glucan has a degree of substitution in the range of from 0.01 to 3.0.
4. The benzyl α-(1→3)-glucan of any one of embodiments 1, 2 or 3 wherein the benzyl α-(1→3)-glucan has a number average molecular weight in the range of from 10,000 to 2,000,000 daltons.
5. The benzyl α-(1→3)-glucan of any one of embodiments 1, 2, 3 or 4 wherein the glucose repeat units comprise greater than or equal to 50% α-(1→3)-glucoside linkages.
6. The benzyl α-(1→3)-glucan of any one of embodiments 1, 2, 3, 4, 5 or 6 wherein the benzyl group is substituted with one or more of a halogen, a cyano, an ester, an amide, an ether group, a C₁ to C₆ alkyl group, an aryl group, a C₂ to C₆ alkene group, a C₂ to C₆ alkyne group, or a combination thereof.
7. The composition of embodiment 2 wherein the composition further comprises a solvent.
8. The composition of embodiment 7 wherein the solvent is dimethyl sulfoxide, dimethyl acetamide, dimethyl formamide, pyridine, 1-methyl-2-pyrrolidinone, or a combination thereof.
9. A blend comprising benzyl α-(1→3)-glucan and one or more polymers.
10. The blend of embodiment 9, wherein the one or more other polymers are polyaramid, polyacrylonitrile, cellulose, or a combination thereof.
11. A fiber comprising any one of the benzyl α-(1→3)-glucan compositions or blends of any embodiment 1, 2, 3, 4, 5, 6, 7, 8, 9 or 10.
12. An article comprising the fiber of embodiment 11.
13. The article of embodiment 12, wherein the article is a carpet, a textile, a fabric, yarn, or apparel.

### EXAMPLES

Unless otherwise noted, all ingredients are available from the Sigma-Aldrich Company, St. Louis, Missouri.

### Example 1: Preparation of α-(1→3)-glucan

α-(1→3)-glucan was prepared in a similar manner to that as disclosed in U.S. Patent 8,871,474, Example 18. The α-(1→3)-glucan had a number average molecular weight of 114,100 daltons.

### Example 2: Preparation of benzyl α-(1→3)-glucan

To stirring deionized water (1.5 liters) in a 4 liter kettle was added α-(1→3)-glucan (250 grams, 87.5 percent by weight), deionized water (500 mL), and aqueous NaOH (500 mL, 28.1 percent by weight). The solution was stirred for 13 hours at room temperature. Benzyl chloride (265 milliliters (mL)) was added and the solution was heated to 90°C for 3 hours. The reaction was cooled to room temperature and the product was isolated by vacuum filtration. The polymer was purified by washing with water until pH 7 and then with acetone until the filtrate was colorless. The polymer was dried in a vacuum oven at room temperature yielding benzyl α-(1→3)-glucan as a light beige colored solid (150.2 g, non-optimized). The degree of substitution (DoS=0.44) was determined by quantitative ¹³C-NMR in 90/10 (v/v) dimethyl sulfoxide-d₆/D₂O with 3 percent by weight LiCI. Size exclusion chromatography in dimethyl sulfoxide with 2 percent by weight LiCI indicated a number average molecular weight of 84 kDa (kilo daltons) and a weight average molecular weight of 147 kDa.

### Example 3: Preparation of benzyl α-(1→3)-glucan

To stirring N,N-dimethylacetamide (60 mL) was added α-(1→3)-glucan (2.43 g, 87.5 percent by weight solids). The mixture was heated to 100°C for 0.5 h and cooled to 90°C. Aqueous NaOH (6 mL, 20 percent by weight) was added to the reaction and stirred for 30 minutes. Benzyl chloride (3.5 mL) was added and the reaction was stirred for 5 hours at 90°C. The reaction was cooled to 20°C and poured into stirring methanol. The precipitate was isolated by filtration and purified by washing with water until the pH of the filtrate was neutral, followed by methanol until the filtrate was clear. The product was dried in a vacuum oven at room temperature yielding a light beige colored solid (1.36 g). The degree of substitution (DoS=0.07) was determined by ¹H-NMR spectroscopy in 4.5 wt.% NaOD / D₂O.

### Example 4: Preparation of 4-ethylbenzyl α-(1→3)-glucan

To stirring deionized water (33 mL) was added α-(1→3)-glucan (4.99 g, 87.5 percent by weight solids) and aqueous NaOH (17 mL, 14.7 percent by weight). The mixture was stirred until the α-(1→3)-glucan dissolved (∼1 hour) and then heated to 90°C. 4-ethylbenzyl chloride (6.2 mL) was added and the reaction was stirred for an additional 6 hours at 90°C. The reaction was cooled to 20°C and poured into stirring acetone (50 mL). The precipitate was isolated by vacuum filtration. The product was purified by blending with water until the pH of the filtrate was neutral and then acetone until the filtrate was colorless. The product was dried in a vacuum oven at room temperature yielding a light beige colored solid (1.46 g). The degree of substitution (DoS = 0.13) was estimated by ¹H-NMR spectroscopy in dimethyl sulfoxide-d₆.

### Example 5: Preparation of 4-chlorobenzyl α-(1→3)-glucan

To stirring deionized water (33 mL) was added α-(1→3)-glucan (5.04 g, 87.5percent by weight solids) followed by aqueous NaOH (17 mL, 14.7 percent by weight). The mixture was stirred until the α-(1→3)-glucan dissolved (∼1 hour) and then heated to 90°C. 4-Chlorobenzyl chloride (5.25 mL) was added and the reaction was stirred for an additional 6.5 hours at 90°C. The reaction was cooled to 20°C and the product was isolated by vacuum filtration. The polymer was purified by blending with water until the pH of the filtrate was neutral and then acetone until the filtrate was colorless. The product was dried in a vacuum oven at room temperature yielding a light yellow colored solid (2.48 g). The degree of substitution (DoS = 0.39) was estimated by ¹H-NMR spectroscopy in dimethyl sulfoxide-d₆.

### EXAMPLE 6: Preparation of benzyl α-(1→3)-glucan

To a 4 liter kettle was added deionized water (2.5 liters), NaOH (140.5 g), and α-(1→3)-glucan (250 g, 87.5 percent by weight). The solution was stirred for 16 hours at room temperature and benzyl chloride (265 mL) was added. The reaction was heated to 90 °C for 6 hours and then cooled to room temperature. The reaction was blended with acetone and the precipitate was isolated by vacuum filtration. The polymer was purified by washing with acetone and water until the filtrate was colorless. Further purification was performed by dissolving the polymer into dimethyl sulfoxide and precipitating into acetone. The precipitate was washed with acetone until the filtrate was colorless. The polymer was dried in a vacuum oven at room temperature yielding benzyl α-(1→3)-glucan as a light beige colored solid (153.6 g). The degree of substitution (DoS=0.47) was estimated by ¹H-NMR in 90/10 (v/v) dimethyl sulfoxide-d₆ /D₂O with 3% LiCI.

### EXAMPLE 7: Preparation of benzyl α-(1→3)-glucan fibers

30 grams of the benzyl α-(1→3)-glucan prepared in Example 6 were dissolved in 90 grams of dimethyl acetamide. The solution was left to stand overnight. The mixture was then screened several times through a 325 mesh stainless steel screen. The screened material was then wet spun through 10 spinnerets of 1.02 millimeter (0.004 inch) diameter directly into a coagulation bath containing water at 22°C and collected onto a bobbin to give fibers of benzyl α-(1→3)-glucan in the form of a fused yarn.

### EXAMPLE 8: Preparation of benzyl α-(1→3)-glucan

To a 4-liter kettle was added deionized water (1.5 liters), α-(1→3)-glucan (250 g, 88.9 wt. % solids) with stirring, and aqueous NaOH (112.5 g in 500 mL deionized water). After dissolution of the α-(1→3)-glucan (∼ 1 hour), benzyl bromide (201 mL) was added and the reaction was heated to 55 °C for 1.5 hours, cooled to 40 °C, and the pH was adjusted to 7.0 using glacial acetic acid. The precipitate was isolated by vacuum filtration. The solid was purified by blending in H₂O / MeOH (90/10 v/v) twice followed by blending in methanol (5 times). The product was dried in a vacuum oven at room temperature yielding a white colored solid (257.44 g, 95% yield). The degree of substitution (DoS = 0.39) was determined by ¹H-NMR spectroscopy (27.8 mg was stirred in 1.0 mL of 5M TFA in D₂O overnight at 90 °C to depolymerize the product, the fine solids were removed by centrifugation, and the spectrum was recorded. The benzyl aromatic protons were integrated vs. the non-anomeric glucose protons to determine the degree of substitution). Molecular weight was determined by size exclusion chromatography (0.25% LiCl / DMAc mobile phase); the product had a number average molecular weight of 85 kDa (kilo daltons) and a weight average molecular weight of 153 kDa.

### EXAMPLE 9: Preparation of benzyl glucan

To a 1-liter kettle was added deionized water (400 mL), α-(1→3)-glucan (50 g, 88.9 wt. % solids) with stirring, and aqueous NaOH (25 g in 100 mL deionized water). After dissolution of the α-(1→3)-glucan (∼ 1 hour), benzyl bromide (55 mL) was added and the reaction was heated to 55 °C for 75 minutes, cooled to 40 °C, and the pH was adjusted to 7.0 using glacial acetic acid. The precipitate was isolated by vacuum filtration. The solid was purified by blending in H₂O (2x), 25/75 H₂O/acetone, 50/50 H₂O/acetone, 75/25 H₂O/acetone, 50/50 H₂O/MeOH, 75/25 H₂O/MeOH, and MeOH (3x). The product was dried in a vacuum oven at room temperature yielding a white colored solid (51.92 g, 87% yield). The degree of substitution (DoS = 0.59) was determined by ¹H-NMR spectroscopy (25.3 mg was stirred in 1.0 mL of 4M TFA in D₂O for 7 hours at 80 °C to depolymerize the product, and the spectrum was recorded. The benzyl aromatic protons were integrated vs. the non-anomeric glucose protons to determine the degree of substitution). Molecular weight was determined by size exclusion chromatography (0.25% LiCl / DMAc mobile phase); the product had a number average molecular weight of 75 kDa (kilo daltons) and a weight average molecular weight of 130 kDa.

## Claims

1. Benzyl α-(1→3-)-glucan.

2. The benzyl α-(1→3)-glucan of claim 1, wherein the benzyl α-(1→3)-glucan has a degree of substitution in the range of from 0.01 to 3.0.

3. The benzyl α-(1→3)-glucan of claim 1, wherein the benzyl α-(1→3)-glucan has a number average molecular weight in the range of from 10,000 to 2,000,000 daltons.

4. The benzyl α-(1→3)-glucan of claim 1, wherein the glucose repeat units comprise greater than or equal to 50% α-(1→3)-glucoside linkages.

5. The benzyl α-(1→3)-glucan of claim 1, wherein the benzyl group is substituted with one or more of a halogen, a cyano, an ester, an amide, an ether group, a C₁ to C₆ alkyl group, an aryl group, a C₂ to C₆ alkene group, a C₂ to C₆ alkyne group, or a combination thereof.

6. A composition comprising benzyl α-(1→3)-glucan.

7. The composition of claim 6, wherein the composition further comprises a solvent.

8. The composition of claim 7, wherein the solvent is dimethyl sulfoxide, dimethyl acetamide, dimethyl formamide, pyridine, 1-methyl-2-pyrrolidinone, or a combination thereof.

9. A blend comprising benzyl α-(1→3)-glucan and one or more polymers.

10. The blend of claim 9, wherein the one or more polymers are polyaramid, polyacrylonitrile, cellulose, or a combination thereof.

11. A fiber comprising benzyl α-(1→3-)-glucan.

12. The fiber of claim 11, wherein the fiber is a blend of benzyl α-(1→3)-glucan with one or more polymers, and wherein the one or more polymers are polyaramid, polyacrylonitrile, cellulose, or a combination thereof.

13. An article comprising the fiber of claim 11.

14. The article of claim 13, wherein the article is a carpet, a textile, a fabric, yarn, or apparel.

## Patentansprüche

1. Benzyl-α-(1→3)-glucan.

2. Benzyl-α-(1→3)-glucan nach Anspruch 1, wobei das Benzyl-α-(1→3-)-glucan einen Substitutionsgrad im Bereich von 0,01 bis 3,0 aufweist.

3. Benzyl-α-(1→3)-glucan nach Anspruch 1, wobei das Benzyl-α-(1→3-)-glucan ein zahlendurchschnittliches Molekulargewicht im Bereich von 10.000 bis 2.000.000 Dalton aufweist.

4. Benzyl-α-(1 →3)-glucan nach Anspruch 1, wobei die Glucosewiederholungseinheiten mehr als oder gleich 50 % α-(1→3-)-Glucosidverknüpfungen aufweisen.

5. Benzyl-α-(1→3)-glucan nach Anspruch 1, wobei die Benzylgruppe mit einem oder mehreren von einem Halogen, einer Cyano-, einer Ester-, einer Amid-, einer Ethergruppe, einer C₁- bis C₆-Alkylgruppe, einer Arylgruppe, einer C₂- bis C₆-Alkengruppe, einer C₂- bis C₆-Alkyngruppe oder einer Kombination davon substituiert ist.

6. Zusammensetzung umfassend Benzyl-α-(1→3)-glucan.

7. Zusammensetzung nach Anspruch 6, wobei die Zusammensetzung ferner ein Lösungsmittel umfasst.

8. Zusammensetzung nach Anspruch 7, wobei das Lösungsmittel Dimethylsulfoxid, Dimethylacetamid, Dimethylformamid, Pyridin, 1-Methyl-2-pyrrolidinon oder eine Kombination davon ist.

9. Abmischung umfassend Benzyl-α-(1→3)-glucan und ein oder mehrere Polymere.

10. Abmischung nach Anspruch 9, wobei das eine oder die mehreren Polymere Polyaramid, Polyacrylnitril, Cellulose oder eine Kombination davon sind.

11. Faser umfassend Benzyl-α-(1→3)-glucan.

12. Faser nach Anspruch 11, wobei die Faser eine Abmischung von Benzyl-α-(1→3)-glucan mit einem oder mehreren Polymeren ist und wobei das eine oder die mehreren Polymere Polyaramid, Polyacrylnitril, Cellulose oder eine Kombination davon sind.

13. Artikel umfassend die Faser nach Anspruch 11.

14. Artikel nach Anspruch 13, wobei der Artikel ein Teppich, ein Textil, ein Gewebe, Garn oder Kleidungsstück ist.

## Revendications

1. Benzyle α-(1→3)-glucane.

2. Benzyle α-(1→3)-glucane selon la revendication 1, le benzyle α-(1→3)-glucane présentant un degré de substitution situé dans la plage de 0,01 à 3,0.

3. Benzyle α-(1→3)-glucane selon la revendication 1, le benzyle α-(1→3)-glucane présentant un poids moléculaire moyen en nombre situé dans la plage de 10 000 à 2 000 000 daltons.

4. Benzyle α-(1→3)-glucane selon la revendication 1, les motifs de répétition glucose comprenant un nombre supérieur ou égal à 50 % de liaisons α-(1 →3)-glucoside.

5. Benzyle α-(1→3)-glucane selon la revendication 1, le groupe benzyle étant substitué par un ou plusieurs parmi un atome d'halogène, un groupe cyano, un ester, un amide, un groupe éther, un groupe alkyle en C₁ à C₆, un groupe aryle, un groupe alcène en C₂ à C₆, un groupe alcyne en C₂ à C₆, ou une combinaison de ceux-ci.

6. Composition comprenant du benzyle α-(1→3)-glucane.

7. Composition selon la revendication 6, la composition comprenant en outre un solvant.

8. Composition selon la revendication 7, le solvant étant le sulfoxyde de diméthyle, l'acétamide de diméthyle, le formamide de diméthyle, la pyridine, la 1-méthyl-2-pyrrolidinone, ou une combinaison de ceux-ci.

9. Mélange comprenant du benzyle α-(1 →3)-glucane et un ou plusieurs polymères.

10. Mélange selon la revendication 9, les un ou plusieurs polymères étant le polyaramide, le polyacrylonitrile, la cellulose, ou une combinaison de ceux-ci.

11. Fibre comprenant du benzyle α-(1→3)-glucane.

12. Fibre selon la revendication 11, la fibre étant un mélange de benzyle α-(1→3)-glucane avec un ou plusieurs polymères, et où les un ou plusieurs polymères sont le polyaramide, le polyacrylonitrile, la cellulose, ou une combinaison de ceux-ci.

13. Article comprenant la fibre selon la revendication 11.

14. Article selon la revendication 13, l'article étant un tapis, un textile, un tissu, un fil, ou un vêtement.
